# EUROPEAN PATENT APPLICATION

(11) **EP 4 760 466 A1**
(43) Date of publication of application: **17.06.2026**
(21) Application number: 24852365.6
(22) Date of filing: 08.08.2024
(51) Int. Cl.: G06F 3/041

(54) **SENSING DRIVING DEVICE AND SENSING DRIVING METHOD**

(30) Priority: 08.08.2023 KR 20230103391
(71) Applicant: LX Semicon Co., Ltd., Daejeon 34027 (KR)
(72) Inventor: PARK, Young Ju, Daejeon 34027 (KR)
(74) Representative: Ter Meer Steinmeister & Partner
(86) International application number: PCT/KR2024/011782
(87) International publication number: WO 2025/034012

(57) **Abstract**

A sensing driving device may comprise a sensing circuit configured to sense a plurality of sensing signals for an object from a plurality of sensing cells arranged on a panel, a memory configured to store a data conversion algorithm, and a processor configured to execute the data conversion algorithm. The processor may label the sensed plurality of sensing signals based on a first threshold value to obtain a plurality of first labeling data, may obtain a target region and a non-target region based on the plurality of first labeling data, and may convert a first labeling data included in the target region into a second labeling data. The target region may be a touch region or a proximity region.

## Description

### Technical Field

The embodiment relates to a sensing driving device and a sensing driving method.

### Background Art

Recently, display devices having an object sensing function capable of recognizing a touch by an object or proximity of an object have been widely used. Such display devices have various sizes, such as small electronic devices (e.g., smartphones) and large electronic devices (e.g., TVs, kiosks, or electronic boards).

The display device includes a plurality of sensing cells disposed on a panel. The display device displays an image on the panel and performs object sensing using the plurality of sensing cells.

In general, sensing is performed together with image display in a display device. In this case, not only image data for image display but also noise generated by the surrounding environment is introduced, thereby degrading sensing performance.

As sensing performance indices, accuracy, precision, and linearity are very important. However, due to the above-described noise, there is a problem in that accuracy, precision, and linearity are degraded.

Meanwhile, since sensing cells are not disposed in an edge region of the display device, that is, a bezel region or a peripheral region thereof, sensing signals are not detected. When data for recognizing a touch or proximity by an object is processed in consideration of such an undetected edge region, there is a problem in that a malfunction occurs due to a detection error of a target region for touch or proximity.

Meanwhile, data processing for detecting a target region is performed for the entire region of the display device or is performed for a partial region of the display device. When detection of the target region is performed for the entire region of the display device, detection is performed over a relatively wide region and proceeds in one direction, thereby increasing the possibility of errors in detecting the target region. When detection of the target region is performed for a partial region of the display device, there is a problem in that processing time is long.

### Disclosure

### Technical Problem

An object of the embodiment is to solve the above-described problems and other problems.

Another object of the embodiment is to provide a sensing driving device and a sensing driving method capable of improving sensing performance.

Another object of the embodiment is to provide a sensing driving device and a sensing driving method capable of preventing detection errors of a target region.

Another object of the embodiment is to provide a sensing driving device and a sensing driving method capable of reducing the possibility of occurrence of errors in detecting a target region.

Another object of the embodiment is to provide a sensing driving device and a sensing driving method capable of reducing processing time.

The technical problems of the embodiments are not limited to those described herein, and include those that may be understood through the description of the invention.

### Technical Solution

In order to achieve the above or other objects, according to a first aspect of the embodiment, a sensing driving device, comprising: a sensing circuit configured to obtain a plurality of sensing signals for an object from a plurality of sensing cells arranged on a panel; a memory configured to store a data conversion algorithm; and a processor configured to execute the data conversion algorithm, wherein the processor is configured to: label the obtained plurality of sensing signals based on a first threshold value to obtain a plurality of first labeling data; obtain a target region and a non-target region based on the plurality of first labeling data; and convert the first labeling data included in the target region into a second labeling data, and wherein the target region is a touch region or a proximity region.

The processor may obtain the first labeling data having the maximum values in each of a row direction and a column direction based on the plurality of first labeling data, and obtain the target region and the non-target region based on the first labeling data having the maximum values using a second threshold value.

The processor may obtain a first candidate target region based on the first labeling data having the maximum values obtained in the row direction, obtain a second candidate target region based on the first labeling data having the maximum values obtained in the column direction, and determine the target region based on the first candidate target region and the second candidate target region.

The processor may sequentially perform conversion into the second labeling data along one direction starting from the first labeling data of a first target region that is in contact with the non-target region.

When the non-target region is positioned between a first target region and a second target region, the processor may sequentially perform conversion into the second labeling data along a first direction starting from the first labeling data of the first target region that is in contact with the non-target region, and sequentially perform the conversion into the second labeling data along a second direction starting from the first labeling data of the second target region that is in contact with the non-target region.

The processor may convert, into the second labeling data, the first labeling data included in at least one or more adjacent regions adjacent to the target region among the non-target region.

In order to achieve the above or other objects, according to a second aspect of the embodiment, a sensing driving method comprises: labeling a plurality of sensing signals for an object based on a first threshold value to obtain a plurality of first labeling data; obtaining a target region and a non-target region based on the plurality of first labeling data; and converting a first labeling data included in the target region into a second labeling data, wherein the plurality of sensing signals are obtained from a plurality of sensing cells arranged on a panel, and wherein the target region is a touch region or a proximity region.

The obtaining of the target region and the non-target region may comprises obtaining the first labeling data having the maximum values in each of a row direction and a column direction based on the plurality of first labeling data; and obtaining the target region and the non-target region based on the first labeling data having the maximum values using a second threshold value.

The obtaining of the target region and the non-target region may comprises obtaining a first candidate target region based on the first labeling data having the maximum values obtained in the row direction; obtaining a second candidate target region based on the first labeling data having the maximum values obtained in the column direction; and determining the target region based on the first candidate target region and the second candidate target region.

The sensing driving method may comprise converting, into the second labeling data, the first labeling data included in at least one or more adjacent regions adjacent to the target region.

### Advantageous Effects

Effects of the sensing driving device, the sensing driving method, and the display device according to the embodiment will be described as follows.

According to at least one of the aspects, since the target region and the non-target region are obtained from the entire region of a plurality of first labeling data, the target region, that is, a touch region or a proximity region, may be accurately detected. In other words, noise introduced from the non-target region is blocked from affecting the target region, and in the target region, the conversion into the second labeling data is performed based on sensing signals comprising signals or noise in the target region itself, thereby preventing detection errors of the target region and reducing the possibility of occurrence of detection errors of the target region.

According to at least one of the aspects, since the conversion into the second labeling data is performed only for the target region using a D2S conversion scheme, it is possible to solve detection errors of a touch region or a proximity region due to noise accumulation caused by uniformly converting into the second labeling data without distinguishing between the target region and the non-target region.

According to at least one of the aspects, the conversion into the second labeling data is performed for the obtained target region among the entire region of the plurality of first labeling data having a matrix form, and the conversion into the second labeling data is skipped for the non-target region, thereby improving sensing performance, that is, accuracy, precision, and linearity, and significantly reducing data processing time.

According to at least one of the aspects, since the first labeling data included in at least one adjacent region adjacent to the target region among the non-target regions are converted into the second labeling data, sensing performance can be further improved.

Further scope of applicability of the embodiment will become apparent from the detailed description given hereinafter. However, various changes and modifications within the spirit and scope of the embodiments will be clearly understood by those skilled in the art, and therefore, the detailed description and specific embodiments such as preferred embodiments should be understood as being given by way of example only.

### Description of Drawings

FIG. 1 is a configuration diagram of a display device according to a first embodiment.
FIG. 2 illustrates a sensing driving device and a panel of FIG. 1.
FIG. 3 is a configuration diagram of the sensing driving device of FIG. 2.
FIG. 4 is a diagram for explaining a Full D2S conversion scheme according to the embodiment.
FIG. 5 illustrates a plurality of second labeling data obtained by a Local D2S conversion scheme according to the embodiment.
FIG. 6 is a configuration diagram of a display device according to a second embodiment.
FIG. 7 is a flowchart for explaining a sensing driving method according to the embodiment.
FIG. 8 illustrates a plurality of first labeling data according to the embodiment.
FIG. 9 illustrates obtaining a target region and a non-target region based on the plurality of first labeling data illustrated in FIG. 8.
FIG. 10 illustrates obtaining the second labeling data for the target region illustrated in FIG. 9.
FIG. 11 is a flowchart for explaining S220 of FIG. 7 in detail.
FIG. 12 is a flowchart for explaining S221 and S225 of FIG. 11 in more detail.
FIG. 13 is an example diagram for explaining the conversion into the second labeling data according to the embodiment.
FIG. 14 is another example diagram for explaining the conversion into the second labeling data according to the embodiment.
FIG. 15 illustrates conversion of a plurality of first labeling data into a plurality of second labeling data in a comparative example and the embodiment.

### Mode for Invention

Hereinafter, embodiments disclosed in this specification will be described in detail with reference to the attached drawings. Regardless of the drawing numbers, identical or similar components will be given the same reference numerals, and redundant descriptions thereof will be omitted. The suffixes "module" and "part" used in the following description for components are given or used interchangeably for ease of writing the specification, and do not in themselves have distinct meanings or roles. Furthermore, the attached drawings are intended to facilitate understanding of the embodiments disclosed in this specification, and the technical concepts disclosed in this specification are not limited by the attached drawings. Furthermore, when an element such as a layer, region, or substrate is referred to as existing "on" another element, this comprises that it may be directly on the other element, or that other intermediate elements may be present between them.

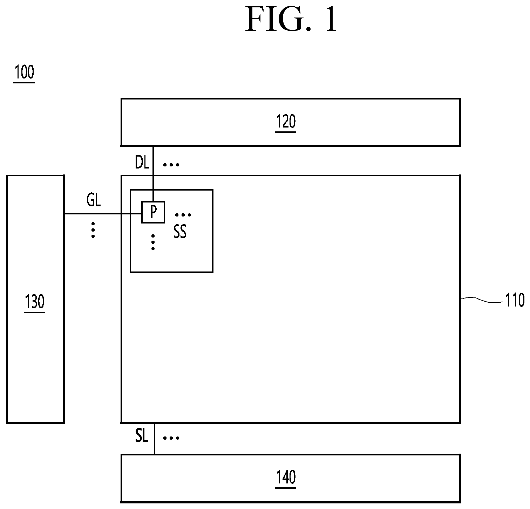

FIG. 1 is a configuration diagram of a display device according to a first embodiment.

Referring to FIG. 1, the display device (100) according to the embodiment may comprise a panel(110), a data driving device (120), a gate driving device (130), and a sensing driving device (140).

In the embodiment, the panel (110) may comprise a liquid-crystal display panel, an organic light-emitting display panel, and the like, but is not limited thereto.

The panel (110) may comprise a plurality of gate lines (GL), a plurality of data lines (DL), and a plurality of pixels (P). The plurality of gate lines (GL) may be connected to the gate driving device (130). The plurality of data lines (DL) may be connected to the data driving device (120). The plurality of pixels (P) may be connected to the plurality of gate lines (GL) and the plurality of data lines (DL).

The sensing cells (SS) may comprise sensing electrodes. The sensing electrodes may comprise a first sensing electrode (not illustrated) and a second sensing electrode (not illustrated), but are not limited thereto. A predetermined capacitance may be formed between the first sensing electrode and the second sensing electrode. A driving signal (STX) may be provided to the first sensing electrode, and a sensing signal (SRX) may be output from the second sensing electrode. When a touch occurs on the sensing cell (SS) by an object or an object approaches the sensing cell (SS), the capacitance between the first sensing electrode and the second sensing electrode may be changed, and the changed capacitance may be output as the sensing signal (SRX). The object may comprise a hand, a finger, a pen, and the like. Object sensing may also be performed by having only one sensing electrode, without being divided into a first sensing electrode and a second sensing electrode.

The display panel and the sensing panel may share some components with each other. For example, the display panel and the sensing panel may share the upper substrate with each other.

As another example, a sensing electrode constituting the sensing cell (SS) in the sensing panel and a common electrode constituting the pixel (P) in the display panel may be shared with each other.

As another example, a sensing electrode constituting the sensing cell (SS) in the sensing panel and a common electrode constituting the pixel (P) in the display panel may not be shared with each other and may be independently provided.

Meanwhile, the data driving device (120) may provide data signals to data lines (DL) for displaying the data signals to pixels (P) of the panel (110) in order to display an image signal.

The gate driving device (130) may sequentially provide scan signals to a plurality of gate lines (GL) in order to turn on or turn off a transistors located in the pixels (P).

The gate driving device (130) may be located on only one side of the panel (110) as illustrated in this drawing according to a driving scheme, or may be divided into two and located on both sides of the panel (110).

The sensing driving device (140) supplies driving signals (STX) to all or a part of a plurality of sensing cells (SS) connected to a plurality of sensing lines (SL). Although not illustrated, the sensing lines (SL) may comprise first sensing lines (SL11 to SL1m) and second sensing lines (SL21 to SL2n). For example, the first sensing lines (SL11 to SL1m) may be connected to first sensing electrodes of the sensing cells (SS), and the second sensing lines (SL21 to SL2n) may be connected to second sensing electrodes of the sensing cells (SS). The first sensing lines (SL11 to SL1m) may provide the driving signals (STX) generated by the sensing driving device (140) to the first sensing electrodes of the sensing cells (SS). The second sensing lines (SL21 to SL2n) may provide sensing signals (SRX) output from the second sensing electrodes of the sensing cells (SS) to the sensing driving device (140). The first sensing lines (SL11 to SL1m) may be referred to as transmission sensing lines, and the second sensing lines (SL21 to SL2n) may be referred to as reception sensing lines. Object sensing may also be performed by having only one sensing line, without being divided into the first sensing lines (SL11 to SL1m) and the second sensing lines (SL21 to SL2n).

As an example, the sensing driving device (140) may be configured separately from the data driving device (120) and the gate driving device (130). For example, the data driving device (120), the gate driving device (130), and the sensing driving device (140) may be configured as individually integrated circuits. As another example, according to an implementation scheme, the sensing driving device (140) may be included in the data driving device (120) or the gate driving device (130).

This sensing driving device (140) is not limited by its implementation and design method. In the embodiment, as long as its performance functions are identical or similar, it may be a separate component itself or may be installed internally or externally within another component.

While the drawing illustrates one sensing driving device (140), two or more sensing driving devices (140) may be provided.

Meanwhile, the display device (100) may adopt a capacitive-type object sensing scheme that recognizes the touch or proximity of an object by detecting changes in capacitances through sensing cells (SS).

The capacitive-type object sensing scheme may be divided into, for example, mutual-capacitance type object sensing scheme and self-capacitance type object sensing scheme.

The display device (100) may adopt one of the two afore-mentioned capacitance-type object sensing scheme, i.e., the mutual capacitance-type object sensing scheme and the self-capacitance-type object sensing scheme. For convenience of explanation, the embodiment will be described below assuming that the mutual capacitance-type object sensing scheme is adopted.

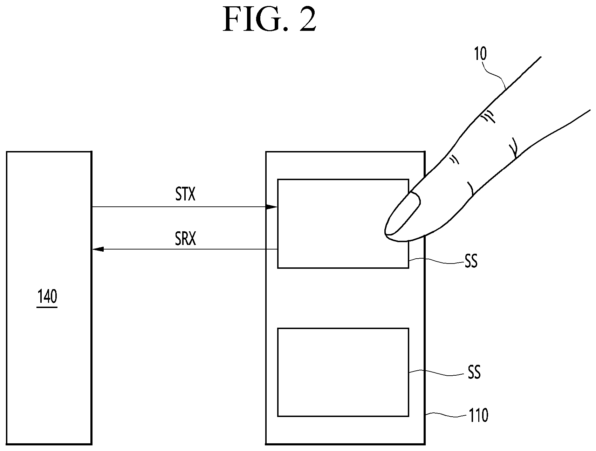

FIG. 2 illustrates the sensing driving device and panel of FIG. 1.

Referring to FIG. 2, the sensing driving device (140) may supply a driving signal (STX) to a sensing cell (SS) on the panel (110).

The driving signal (STX) may be a voltage signal or a current signal. The driving signal (STX) may have a pulse-shaped waveform. The pulse-shaped waveform may be of various shapes, such as a square wave or a rectangular wave. For convenience of explanation, the following embodiments will be described assuming that a driving signal (STX) having a rectangular wave is adopted.

The sensing driving device (140) may receive a sensing signal (SRX) corresponding to the driving signal (STX) from the sensing cell (SS). The sensing driving device (140) may sense the touch or proximity of an object (10) to the panel (110) by demodulating the received sensing signal (SRX), and detect the presence or absence of an object, object coordinates, etc. The sensing signal (SRX) may be a voltage signal or a current signal. The driving signal (STX) may have a pulse-shaped waveform. The pulse-shaped waveform may be various waveforms such as a square wave or a rectangular wave.

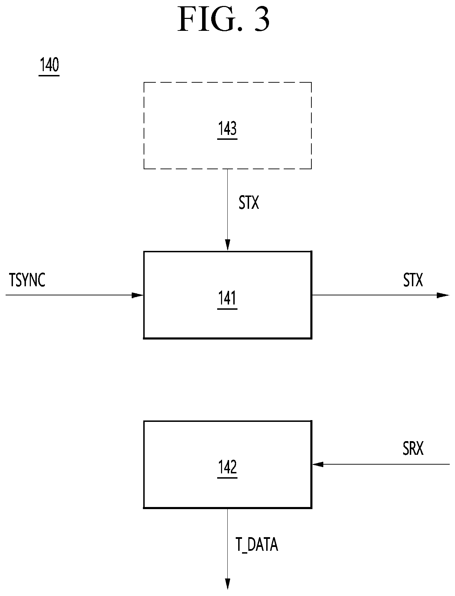

FIG. 3 is a configuration diagram of the sensing driving device of FIG. 2.

Referring to FIG. 3, the sensing driving device (140) may comprise a driving unit (141) and a sensing unit (142). The driving unit (141) and/or the sensing unit (142) may be configured as integrated circuits. The driving unit (141) and the sensing unit (142) may be integrated into one integrated circuit, or may be integrated into separate integrated circuits.

The driving unit (141) may provide a driving signal (STX) to the sensing cell (SS) on the panel (110). For example, the driving unit (141) may supply the driving signal (STX) to one or more sensing cells (SS) connected to each of the plurality of first sensing lines (SL11 to SL1m) on the panel (110), but is not limited thereto.

The sensing unit (142) may receive a sensing signal (SRX) corresponding to the driving signal (STX) from one or more sensing cells (SS) connected to each of the plurality of second sensing lines (SL21 to SL2n) on the panel (110). The sensing unit (142) may sense or detect a touch or proximity of an object with respect to the panel (110) based on the sensing signal (SRX).

The sensing unit (142) may generate sensing data (T_DATA) according to the sensing signal (SRX).

The sensing data (T_DATA) may comprise sensing value generated by demodulating the sensing signal (SRX). The sensing value may be, for example, time-integrated value of current or voltage of the sensing signal (SRX). The sensing value may be used to determine whether an object (10) is present on the panel (110) or to generate object coordinate. For example, when the magnitude of a sensing value is greater than or less than a reference value, it may be determined that a touch by an object has occurred or that an object is in proximity.

Meanwhile, the sensing driving device (140) may comprise a signal generation unit (143).

The signal generation unit (143) may generate the driving signal (STX) supplied to the sensing cell (SS) on the panel (110). The driving unit (141) may receive the driving signal (STX) from the signal generation unit (143) and supply the driving signal (STX) to the sensing cell (SS) on the panel (110).

The signal generation unit (143) may be provided inside the sensing driving device (140), or may be provided inside the data driving device (120) or the gate driving device (130). The signal generation unit (143) may be implemented through a separate integrated circuit according to an implementation scheme.

Meanwhile, in the embodiment, the sensing signal (SRX) may be sensed in a differential manner. Since differential signals sensed in a differential manner are robust to noise, sensing performance, that is, accuracy, precision, and linearity, can be improved by using the differential signals.

In the following description, reference numerals omitted in the drawings may be adopted from the preceding drawings (FIGS. 1 to 3).

First labeling data may be obtained based on the sensed differential signals, and the first labeling data may be converted into the second labeling data.

Since the first labeling data is data generated based on the differential signals, the original sensing signals (SRX) prior to the differential signals, i.e., the sensing signals (SRX) from the plurality of sensing cells (SS) on the panel (110), are required in order to obtain the position or coordinates of an object. To this end, the first labeling data may be converted into the second labeling data. In other words, the position or coordinates of the object may be obtained based on the second labeling data. That is, since the first labeling data are obtained based on the differential signals, the first labeling data do not comprise information for each of the sensing cells (SS) on the panel (110). Accordingly, the first labeling data may be converted into the second labeling data so that information for each of the sensing cells (SS) may be obtained.

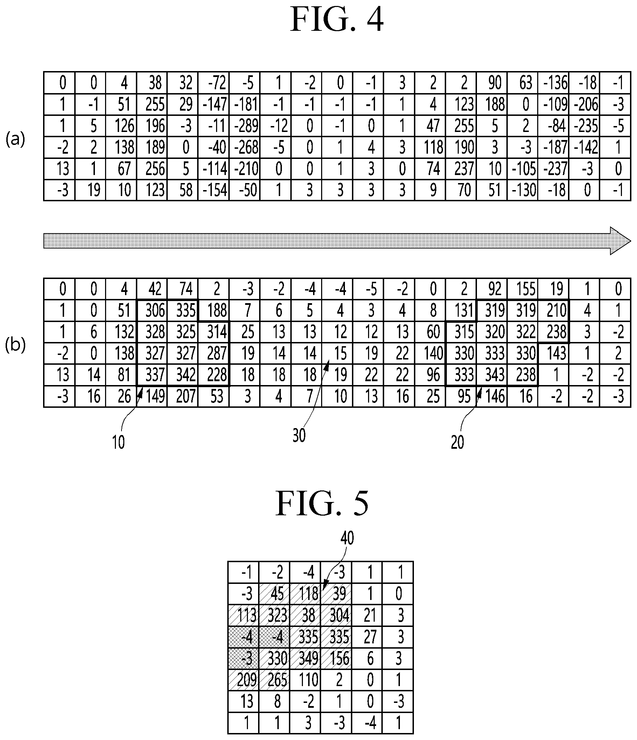

As an example, as illustrated in (a) of FIG. 4, a plurality of first labeling data may be obtained during one frame. That is, during one frame, a plurality of differential signals may be sensed from a plurality of sensing cells (SS) on the panel (110), and a plurality of first labeling data may be obtained based on the plurality of differential signals. The plurality of first labeling data may be temporarily stored in a buffer (not illustrated). The first labeling data may be referred to as raw data.

As illustrated in (b) of FIG. 4, the plurality of first labeling data may be converted into a plurality of second labeling data. For example, the plurality of second labeling data may be obtained by performing an accumulated-addition operation in a left-to-right direction on the entire region of the plurality of first labeling data.

For example, when an accumulated-addition operation is performed in a left-to-right direction on the first labeling data of a first row illustrated in (a) of FIG. 4, that is, 0, 0, 4, 38, 32, -72, -5, 1, -2, 0, -1, 3, 2, 2, 90, 63, -136, -18, and -1, the second labeling data of the first row illustrated in (b) of FIG. 4, that is, 0, 0, 4, 42, 74, 2, -3, -2, -4, -4, -5, -2, 0, 2, 92, 155, 19, 1, and 0, may be obtained. As described above, a scheme in which an operation is performed in a left-to-right direction (or a right-to-left direction) on the entire region of the plurality of first labeling data (full scan method) may be referred to as a Full D2S (differential signal to single-ended signal) conversion scheme.

As illustrated in (b) of FIG. 4, it may be seen that two target regions (10 and 20) exist based on the second labeling data.

However, when the Full D2S conversion scheme is performed, if noise is generated on one side of the plurality of first labeling data, for example, on the left side, the noise may be accumulated as the scanning scheme proceeds, and the accumulated noise may be reflected in the plurality of second labeling data. When no noise is present, the second labeling data in a non-target region (30) may typically be 0, +1, -1, or the like. However, as illustrated in (b) of FIG. 4, in the non-target region (30) between the two target regions (10 and 20), the second labeling data having relatively high values, for example, 12, 13, 14, 15, 18, 19, and 22, may be obtained.

When the plurality of second labeling data reflecting such noise are obtained, errors may occur in detecting the position or coordinates of an object. Accordingly, the position or coordinates of the object may not be detected, or the position or coordinates of the object may be detected in a region other than an original region to be detected.

In particular, since sensing cells (SS) are not disposed in an edge region of the panel (110), when the Full D2S conversion scheme is performed, the possibility of noise inflow is very high.

As another example, the second labeling data may be obtained by performing an accumulated-addition operation (local scan scheme) on a local region of the plurality of first labeling data. Such a scheme may be referred to as a Local D2S conversion scheme. The Local D2S conversion scheme has been proposed to solve a noise accumulation problem of the scan scheme (FIGS. 4(a) and 4(b)) for the entire region of the plurality of first labeling data.

FIG. 5 illustrates a plurality of second labeling data obtained by the Local D2S conversion scheme according to the embodiment.

As illustrated in FIG. 5, when the plurality of second labeling data are obtained by the Local D2S conversion scheme, the second labeling data having errors such as -3 and -4 may be obtained in a target region (40). When the number of errors of the second labeling data in the target region (40) is large, there is a problem in that the target region (40) is not recognized or another region is detected as the target region.

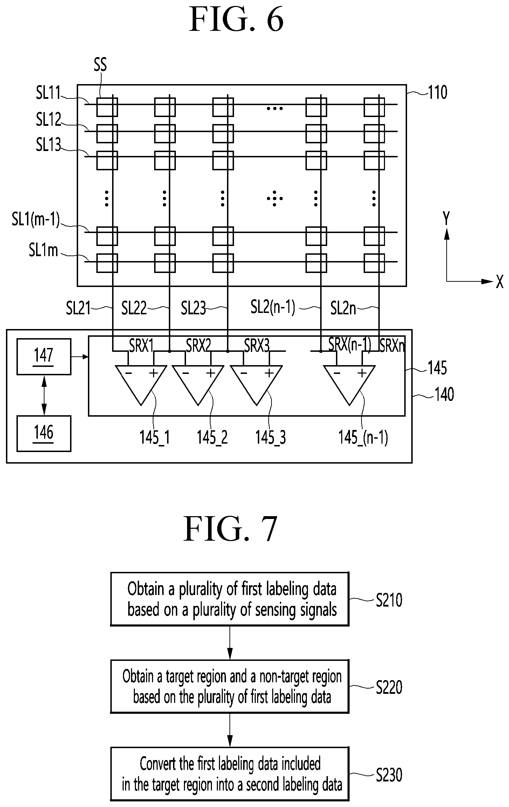

FIG. 6 is a configuration diagram of a display device according to a second embodiment.

Referring to FIG. 6, the display device according to the second embodiment may comprise a panel (110) and a sensing driving device (140).

The panel (110) may display an image. To this end, the panel (110) may comprise a plurality of pixels (not illustrated). Image data may be provided to each of the plurality of pixels, and desired color light may be emitted from each of the plurality of pixels.

Meanwhile, the panel (110) may output sensing signals (SRX1 to SRXn) for recognizing a touch or proximity of an object.

The panel (110) may comprise a display panel for displaying an image and a sensing panel for outputting sensing signals (SRX1 to SRXn). As described above, the sensing panel may be integrally formed with the display panel or may be disposed on the display panel.

The panel (110) illustrated in FIG. 6 may be a sensing panel. In FIG. 6, the display panel may be integrally formed with the sensing panel or may be separately disposed under the sensing panel.

A plurality of sensing cells (SS) may be arranged on the panel (110). The plurality of sensing cells (SS) may be arranged in a matrix, but are not limited thereto. The sensing cells (SS) may be referred to as sensing nodes, touch nodes, and the like. The sensing cells (SS) may comprise sensing electrodes. The sensing electrode may include, but is not limited to, a first sensing electrode (not illustrated) and a second sensing electrode (not illustrated).

For example, a plurality of first sensing lines (SL11 to SL1m) may be disposed on the panel (110) to extend along a first direction (X-axis direction). The plurality of first sensing lines (SL11 to SL1m) may traverse a plurality of sensing cells (SS), but are not limited thereto. The plurality of first sensing lines (SL11 to SL1m) may be connected to a plurality of sensing cells (SS). The first sensing lines (SL11 to SL1m) may be connected to first sensing electrodes of the sensing cells (SS). Driving signals (STX of FIGS. 2 and 3) may be provided to the plurality of sensing cells (SS) through the plurality of first sensing lines (SL11 to SL1m). The driving signals (STX) may be provided to the first sensing electrodes of the sensing cells (SS) through the first sensing lines (SL11 to SL1m).

For example, a plurality of second sensing lines (SL21 to SL2n) may be disposed on the panel (110) to extend along a second direction (Y-axis direction). The plurality of second sensing lines (SL21 to SL2n) may traverse the plurality of sensing cells (SS), but are not limited thereto. The plurality of second sensing lines (SL21 to SL2n) may be connected to the plurality of sensing cells (SS). The second sensing lines (SL21 to SL2n) may be connected to second sensing electrodes of the sensing cells (SS). The sensing signals (SRX1 to SRXn) may be output from the plurality of sensing cells (SS) through the plurality of second sensing lines (SL21 to SL2n). The sensing signals (SRX1 to SRXn) may be output from the second sensing electrodes of the sensing cells (SS) through the second sensing lines (SL21 to SL2n). The sensing signals (SRX1 to SRXn) may be generated in response to the driving signals (STX).

When an object approaches the panel (110) or a touch occurs by an object, capacitances between the first sensing electrodes and the second sensing electrodes may change. The capacitances changed in this way may be included in the sensing signals (SRX1 to SRXn). That is, the sensing signals (SRX1 to SRXn) output through the plurality of second sensing lines (SL21 to SL2n) may be changed by the proximity or touch of the object, and the proximity of the object or the touch of the object may be recognized on the panel (110) based on the change information of the sensing signals (SRX1 to SRXn).

Meanwhile, the sensing driving device (140) may comprise a sensing circuit (145), a memory (146), and a processor (147).

The sensing circuit (145) may generate the driving signals (STX). The sensing circuit (145) may provide the driving signals (STX) onto the panel (110) through a plurality of first sensing lines (SL11 to SL1m) for each period. For example, during one period, the driving signals (STX) may be sequentially provided to the plurality of first sensing lines (SL11 to SL1m). The driving signals (STX) may be provided in the order of a first-first sensing line (SL11), a first-second sensing line (SL12), ..., and a first-m sensing line (SL1m).

Here, the period may be one frame or a portion of one frame. For example, when one frame is divided into a display interval and a sensing interval, the period may be the sensing interval. For example, when image display and sensing are operated separately from each other, the period may be one frame. That is, the image display and the sensing may be operated separately during one frame.

The sensing circuit (145) may receive a plurality of sensing signals (SRX1 to SRXn) generated on the panel (110) in response to the driving signals (STX). The sensing circuit (145) may receive the plurality of sensing signals (SRX1 to SRXn) from the plurality of sensing cells (SS) on the panel (110) through a plurality of second sensing lines (SL21 to SL2n). For example, in response to the driving signal (STX) provided to the first-first sensing line (SL11), a plurality of sensing signals (SRX1 to SRXn) generated from the plurality of sensing cells (SS) on the first-first sensing line (SL11) may be provided to the sensing circuit (145). Thereafter, in response to the driving signal (STX) provided to the first-second sensing line (SL12), a plurality of sensing signals (SRX1 to SRXn) generated from the plurality of sensing cells (SS) on the first-second sensing line (SL12) may be provided to the sensing circuit (145). This operation may be repeated such that, in response to the driving signal (STX) provided to the first-m sensing line (SL1m), the plurality of sensing signals (SRX1 to SRXn) generated from the plurality of sensing cells (SS) on the first-m sensing line (SL1m) may be provided to the sensing circuit (145). Such an operation may be performed for each period. Accordingly, the sensing signals (SRX1 to SRXn) having a matrix form may be output for each period from the plurality of sensing cells (SS) arranged in a matrix on the panel (110).

The sensing circuit (145) may comprise a plurality of differential signal generators (145_1 to 145_(n-1)). The plurality of differential signal generators (145_1 to 145_(n-1)) may generate differential signals (DS1 to DS(n-1)), respectively. The differential signal generators (145_1 to 145_(n-1)) may be differential amplifiers, but may be replaced with components or elements having the same or similar functions as the differential amplifiers.

The differential signal generators (145_1 to 145_(n-1)) may generate differential signals (DS1 to DS(n-1)) based on adjacent sensing signals (SRX1 to SRXn) provided from adjacent second sensing lines (SL21 to SL2n).

For example, a first sensing signal (SRX1) provided from a second-first sensing line (SL21) and a second sensing signal (SRX2) provided from a second-second sensing line (SL22) may be input to a first differential signal generator (145_1). The first sensing signal (SRX1) may be input to an inverting terminal (-) of the first differential signal generator (145_1), and the second sensing signal (SRX2) may be input to a non-inverting terminal (+) of the first differential signal generator (145_1). The first differential signal generator (145_1) may generate a first differential signal (DS1) based on the first sensing signal (SRX1) and the second sensing signal (SRX2). For example, the first differential signal (DS1) may be a value obtained by subtracting the first sensing signal (SRX1) from the second sensing signal (SRX2), but is not limited thereto.

For example, a second sensing signal (SRX2) may be input to an inverting terminal (-) of a second differential signal generator (145_2). In addition, a third sensing signal (SRX3) provided from a second-third sensing line (SL23) may be input to a non-inverting terminal (+) of the second differential signal generator (145_2). The second differential signal generator (145_2) may generate a second differential signal (DS2) based on the second sensing signal (SRX2) and the third sensing signal (SRX3).

In this manner, the plurality of differential signal generators (145_1 to 145_(n-1)) may generate a plurality of differential signals (DS1 to DS(n-1)).

For example, the number of the differential signal generators (145_1 to 145_(n-1)) may be one less than the number of the second sensing lines (SL21 to SL2n). When the number of the second sensing lines (SL21 to SL2n) is n, the number of the differential signal generators (145_1 to 145_(n-1)) may be (n-1). Accordingly, when first to nth sensing signals (SRX1 to SRXn) are provided from the first to nth sensing lines (SL21 to SL2n), the first to (n-1)th differential signal generators (145_1 to 145_(n-1)) may generate first to (n-1)th differential signals (DS1 to DS(n-1)).

The driving signals (STX) may be sequentially provided to the plurality of first sensing lines (SL11 to SL1m), and the plurality of sensing signals (SRX1 to SRXn) for one line may be sequentially output to the plurality of second sensing lines (SL21 to SL2n). Accordingly, the plurality of sensing signals (SRX1 to SRXn) having a matrix form may be generated for each period. Likewise, since the plurality of differential signals (DS1 to DS(n-1)) are also sequentially generated based on the plurality of sensing signals (SRX1 to SRXn) for one line, the plurality of differential signals (DS1 to DS(n-1)) having a matrix form may be generated for each period.

The plurality of differential signals (DS1 to DS(n-1)) for one line may be temporarily stored in a buffer (not illustrated) sequentially, such that the plurality of differential signals (DS1 to DS(n-1)) having a matrix form may be stored in the buffer during one period.

The plurality of differential signals (DS1 to DS(n-1)) may be stored in a memory (146). In this case, the buffer may be omitted.

Meanwhile, the memory (146) may store a data conversion algorithm. The memory (146) may store data required to drive the sensing driving device (140) according to the embodiment, or data obtained during a process of driving the sensing driving device (140). The memory (146) may be provided in the sensing driving device (140), but may also be provided outside the sensing driving device (140). For example, the memory (146) may be provided in a memory (146) of a display device according to the embodiment.

Meanwhile, a processor (147) may execute the data conversion algorithm stored in the memory (146). The processor (147) may be referred to as a controller, a microcontroller unit (MCU), a control device, a sensing controller, or a data processing device. The processor (147) may be provided in the sensing driving device (140), but may also be provided outside the sensing driving device (140). For example, the processor (147) may be provided in a data processing device, a timing controller, or a main processor of a display device according to the embodiment.

Hereinafter, operations of the data conversion algorithm executed by the processor (147) will be described with reference to FIGS. 7 to 15.

FIG. 7 is a flowchart illustrating a sensing driving method according to the embodiment.

Referring to FIGS. 6 and 7, the processor (147) may obtain a plurality of first labeling data based on a plurality of sensing signals (SRX1 to SRXn) (S210).

For example, as described above, the plurality of sensing signals (SRX1 to SRXn) may be stored in a buffer (not illustrated). The plurality of sensing signals (SRX1 to SRXn) for one line may be sequentially stored in the buffer during one period. In addition, the processor (147) may generate a plurality of first labeling data for one line based on the plurality of sensing signals (SRX1 to SRXn) for one line stored in the buffer. As such, as the plurality of first labeling data for one line generated sequentially are stored in the buffer, a plurality of first labeling data having a matrix form may be configured.

The processor (147) may obtain the plurality of first labeling data based on the plurality of sensing signals (SRX1 to SRXn) stored in the buffer.

As another example, the processor (147) may obtain a plurality of first labeling data based on a plurality of differential signals (DS1 to DS(n-1)) output from a plurality of differential signal generators (145_1 to 145_(n-1)) of the sensing circuit (145). In this case, each time a plurality of differential signals (DS1 to DS(n-1)) for one line are output from the plurality of differential signal generators (145_1 to 145_(n-1)), the processor (147) may obtain a plurality of first labeling data based on the plurality of differential signals (DS1 to DS(n-1)). As such, as the plurality of first labeling data for one line are sequentially obtained during one period, a plurality of first labeling data having a matrix form may be configured.

Meanwhile, the plurality of sensing signals (SRX1 to SRXn) may be labeled based on a first threshold value such that a plurality of first labeling data may be obtained. The threshold value may also be referred to as a reference value. As the amplitudes or magnitudes of the plurality of sensing signals (SRX1 to SRXn) are labeled based on the first threshold value, a plurality of first labeling data may be obtained.

The first threshold value may be set to 5% or less of the amplitude or magnitude of the sensing signals (SRX1 to SRXn), but is not limited thereto. For example, when the amplitude of the sensing signals (SRX1 to SRXn) is 100 as a normalized value, the first threshold value may be set to 5 or less.

For example, an amplitude or magnitude of the sensing signals (SRX1 to SRXn) greater than the first threshold value may be generated as the first labeling data having a positive (+) value. For example, an amplitude or magnitude of the sensing signals (SRX1 to SRXn) smaller than the first threshold value may be generated as the first labeling data having a negative (-) value. For example, an amplitude or magnitude of the sensing signals (SRX1 to SRXn) equal to the first threshold value may be generated as the first labeling data having a value of 0. The first threshold value may be set in consideration of noise, environmental variables, and the like.

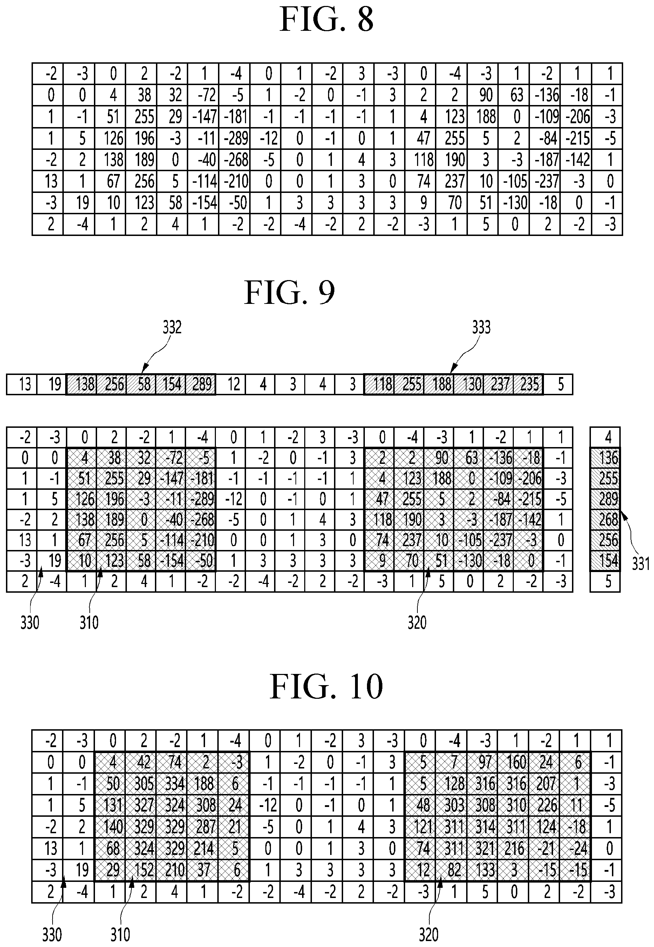

As such labeling results, as illustrated in FIG. 8, a plurality of first labeling data having a matrix form may be obtained. Among the plurality of first labeling data, a region in which the first labeling data having large positive (+) values are clustered has a high possibility of being determined as a target region to be described later. Here, the target region may be a touch region or a proximity region caused by an object, but is not limited thereto.

Meanwhile, in order to accurately detect a position or coordinates of an object, it is necessary to accurately know the sensing signals (SRX1 to SRXn) of the plurality of sensing cells (SS) on the panel (110). However, the plurality of first labeling data illustrated in FIG. 8 are obtained based on a plurality of differential signals (DS1 to DS(n-1)), and thus do not represent the sensing signals (SRX1 to SRXn) of each of the plurality of sensing cells (SS) on the panel (110). Accordingly, the plurality of first labeling data may be converted into a plurality of second labeling data. Since the plurality of second labeling data may represent the sensing signals (SRX1 to SRXn) of each of the plurality of sensing cells (SS) on the panel (110), a position or coordinates of an object may be accurately detected based on the plurality of second labeling data.

Meanwhile, as described above, when the plurality of first labeling data are converted into a plurality of second labeling data using a Full D2S conversion scheme or a Local D2S conversion scheme, various problems as described above may occur.

For example, when the Full D2S conversion scheme is used, there is a problem that the position or coordinates of the object are not detected or the position or coordinates of the object are detected in a different region than the region where it should have been originally detected. For example, when the Local D2S conversion scheme is used, there is a problem that the target region is not recognized or a different region is detected as the target region.

In order to solve such problems, in the embodiment, the processor (147) may obtain a target region and a non-target region based on the plurality of first labeling data (S220). The processor (147) may convert the first labeling data included in the target region into a second labeling data (S230). S220 may be a preprocessing process for conversion into the second labeling data in S230. That is, the target region may be obtained in S220, and the conversion into the second labeling data may be performed only for the target region in S230.

Meanwhile, the processor (147) may obtain target regions (310 and 320) and a non-target region (330) among an entire region of the plurality of first labeling data using a scheme according to the embodiment (FIG. 9). The target regions (310 and 320) may be touch regions or proximity regions caused by an object. The non-target region (330) may be a region in which the object is not touched or is not in proximity.

Accordingly, by obtaining the target regions (310 and 320) and the non-target region (330) among the entire region of the plurality of first labeling data using the scheme according to the embodiment, a touch region or a proximity region may be accurately detected based on the target regions (310 and 320). The target regions (310 and 320) may be detected as a touch region or a proximity region, and a region smaller or larger than the target regions (310 and 320) within the target regions (310 and 320) may be detected as a touch region or a proximity region. In addition, only the target regions (310 and 320) may be converted into the second labeling data using a D2S conversion scheme (FIG. 10). Accordingly, errors in detecting a touch region or a proximity region due to noise accumulation caused by collectively converting into the second labeling data without distinguishing between the target regions (310 and 320) and the non-target region (330) may be solved.

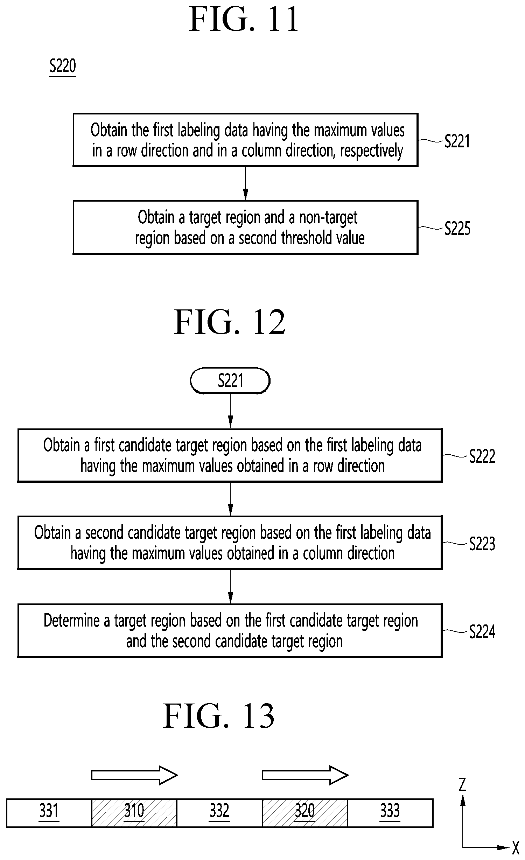

FIG. 11 is a flowchart illustrating S220 of FIG. 7 in detail.

Referring to FIGS. 6 and 11, the processor (147) may obtain the first labeling data having the maximum values in a row direction and in a column direction, respectively (S221).

Specifically, as illustrated in FIG. 12, the processor (147) may obtain a first candidate target region based on the first labeling data having the maximum values obtained in a row direction (S222).

The processor (147) may obtain a second candidate target region based on the first labeling data having the maximum values obtained in a column direction (S223).

For example, at least one or more candidate target regions among the first candidate target region and the second candidate target region may be obtained based on a second threshold value. The second threshold value may be greater than the first threshold value, but is not limited thereto. For example, the second threshold value may be greater than an intensity of noise. For example, when the second threshold value is set to be lower than the intensity of noise, noise may be reflected, and thus a target region may be incorrectly detected. For example, when the second threshold value is set to be too high, a signal may be discarded, and thus sensing performance, that is, accuracy, precision, linearity, and the like, may be degraded. Accordingly, it is desirable that an optimized second threshold value be set, which may be possible through repeated experiments or simulations.

Meanwhile, the processor (147) may determine a target region based on the first candidate target region and the second candidate target region (S224).

Referring back to FIG. 11, the processor (147) may obtain a target region and a non-target region based on the first labeling data having the maximum values obtained in each of a row direction and a column direction (S225). That is, the processor (147) may obtain a first candidate target region based on the first labeling data having the maximum values obtained in the row direction, may obtain a second candidate target region based on the first labeling data having the maximum values obtained in the column direction, and may determine a target region based on the first candidate target region and the second candidate target region, thereby obtaining the target region and the non-target region. When the target region is determined, among an entire region of a plurality of first labeling data having a matrix form, a remaining region excluding the target region may be determined as the non-target region, and thus the target region and the non-target region may be accurately obtained.

Operations of obtaining the target region and the non-target region in FIGS. 11 and 12 will be described in detail with reference to FIGS. 8 to 10.

[140] As illustrated in FIG. 8, a plurality of first labeling data having a matrix form may be provided as raw data. As described above, the plurality of first labeling data may be obtained based on a plurality of sensing signals (SRX1 to SRXn) provided from a plurality of sensing cells (SS) on a panel (110).

Although the drawings illustrate a plurality of first labeling data composed of 8 rows and 19 columns, a plurality of first labeling data composed of more rows and columns may also be provided.

As illustrated in FIG. 9, the first labeling data having the maximum values in a row direction may be obtained from the plurality of first labeling data having a matrix form. For example, as a plurality of first labeling data having the maximum values in the row direction at an upper right of an entire region including the plurality of first labeling data, values of 4, 136, 255, 289, 268, 256, 154, and 5 may be obtained.

The first labeling data having the maximum values in a column direction may be obtained from the plurality of first labeling data having a matrix form. For example, as a plurality of first labeling data having the maximum values in the column direction at an upper side of an entire region including the plurality of first labeling data, values of 13, 19, 138, 256, 58, 154, 289, 12, 4, 3, 4, 3, 118, 255, 188, 130, 237, 235, and 5 may be obtained.

The processor (147) may obtain, in the row direction and in the column direction, not only maximum values of the plurality of first labeling data, but also position information of each of the plurality of first labeling data having the maximum values. For example, the processor (147) may obtain that a maximum value of the first labeling data in a third row is 255, and may obtain position information that first labeling data having 255 as the maximum value is located in the third row and a fourth column.

The processor (147) may compare a plurality of first labeling data having the maximum values obtained in the row direction with a second threshold value, and may obtain a first candidate target region (331) based on the first labeling data having the maximum values greater than the second threshold value. For example, when the second threshold value is set to 50, among maximum values of the plurality of first labeling data obtained in the row direction, that is, 4, 136, 255, 289, 268, 256, 154, and 5, a region comprising 136, 255, 289, 268, 256, and 154 may be determined as the first candidate target region (331).

The processor (147) may compare a plurality of first labeling data having the maximum values obtained in the column direction with the second threshold value, and may obtain second candidate target regions (332 and 333) based on the first labeling data having the maximum values greater than the second threshold value. For example, when the second threshold value is set to 50, among maximum values of the plurality of first labeling data obtained in the column direction, that is, 13, 19, 138, 256, 58, 154, 289, 12, 4, 3, 4, 3, 118, 255, 188, 130, 237, 235, and 5, a region comprising 138, 256, 58, 154, 289, 118, 255, 188, 130, 237, and 235 may be determined as the second candidate target regions (332 and 333). As illustrated in FIG. 9, a region (332) comprising 138, 256, 58, 154, and 289 and a region (333) comprising 118, 255, 188, 130, 237, and 235 may be determined as the second candidate target regions, respectively. The region (332) may be referred to as a second-first candidate target region, and the region (333) may be referred to as a second-second candidate target region.

The processor (147) may overlap the first candidate target region (331) obtained in the row direction and the second candidate target regions (332 and 333) obtained in the column direction, and may determine, as a target region, a region in which the first candidate target region (331) and the second candidate target regions (332 and 333) overlap.

As illustrated in FIG. 9, since one first candidate target region (331) is obtained in the row direction and two second candidate target regions (332 and 333) are obtained in the column direction, as one first candidate target region (331) and the two second candidate target regions (332 and 333) overlap, two target regions (310 and 320) may be obtained.

When the target regions (310 and 320) are determined, the processor (147) may determine a remaining region, excluding the target regions (310 and 320), among an entire region of the plurality of first labeling data, as a non-target region (330).

[150] The processor (147) may obtain a plurality of second labeling data having a matrix form as illustrated in FIG. 10 by converting the first labeling data included in the determined target regions (310 and 320) into the second labeling data. That is, among an entire region of the plurality of second labeling data having a matrix form illustrated in FIG. 10, the first labeling data in the target regions (310 and 320) may be converted into the second labeling data, but the first labeling data in the non-target region (330) are not converted into the second labeling data. Accordingly, among the entire region of the plurality of second labeling data having a matrix form illustrated in FIG. 10, the first labeling data of the non-target region (330) may be identical, for each position (or node), to the first labeling data of the non-target region (330) illustrated in FIG. 9.

As illustrated in FIGS. 9 and 10, conversion into the second labeling data may be performed by adding and subtracting the first labeling data of adjacent columns along one direction with respect to the target regions (310 and 320). In FIG. 9, with respect to a first target region (310), the first labeling data of adjacent columns may be added and subtracted in a left-to-right direction, and thus the conversion into the second labeling data may be performed. In a third row of FIG. 9, a first labeling data of -1 on a last column of the non-target region (330) and a first labeling data of 51 on a first column of the first target region (310) may be added and subtracted, and thus the second labeling data of 50 may be obtained. The second labeling data of 50 and the first labeling data of 255 on a second column of the first target region (310) may be added and subtracted, and thus the second labeling data of 305 may be obtained. The second labeling data of 305 and the first labeling data of 29 on a third column of the first target region (310) may be added and subtracted, and thus the second labeling data of 334 may be obtained. In this manner, the first labeling data of the first target region (310) may be sequentially converted into the second labeling data along one direction.

Meanwhile, with respect to a second target region (320), the conversion into the second labeling data may be performed by adding and subtracting the first labeling data of adjacent columns in a left-to-right direction.

According to the embodiment, by scanning, in one direction using a Full D2S conversion scheme, the entire region of the plurality of first labeling data having a matrix form, detection errors with respect to an object caused by noise accumulation can be prevented. That is, according to the embodiment, by determining the target regions (310 and 320) using the scheme as described above among the entire region of the plurality of first labeling data having a matrix form, and performing conversion into the second labeling data with respect to the determined target regions (310 and 320), detection errors of the target regions (310 and 320) can be prevented, and a possibility of occurrence of errors in detection of the target regions (310 and 320) can be reduced. In addition, according to the embodiment, by determining the target regions (310 and 320) using the scheme as described above among the entire region of the plurality of first labeling data having a matrix form, and performing the conversion into the second labeling data with respect to the determined target regions (310 and 320), sensing performance, that is, accuracy, precision, and linearity, can be improved, and a data processing time can be remarkably reduced.

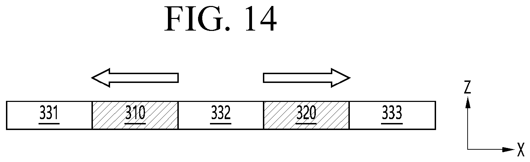

Meanwhile, as described above, the conversion into the second labeling data may be performed with respect to the target regions (310, 320). Hereinafter, with reference to FIGS. 13 and 14, the conversion into the second labeling data will be described.

FIG. 13 is an exemplary view illustrating the conversion into the second labeling data according to the embodiment.

Referring to FIGS. 6 and 13, the processor (147) may perform conversion into the second labeling data sequentially along one direction (the X-axis direction) starting from the first labeling data of the target regions (310, 320) that are in contact with the non-target regions (331, 332, 333).

A first target region (310) may be obtained based on a plurality of first labeling data having the maximum values obtained in each of a row direction and a column direction. For example, in an entire region of a plurality of first labeling data having a matrix form, along one direction (the X-axis direction), that is, in a left-to-right direction, a first non-target region (331) and a first target region (310) that is in contact with the first non-target region (331) may be positioned.

In this case, scanning may be performed in the left-to-right direction for the conversion into the second labeling data. The processor (147) may identify (or distinguish) each of the first target region (310) and the first non-target region (331) based on position (or node) information of each of the plurality of first labeling data and information of each of the first target region (310) and the first non-target region (331). The processor (147) may not perform the conversion into the second labeling data in the first non-target region (331) during scanning in one direction. That is, the conversion into the second labeling data may be skipped (or stopped) with respect to the first non-target region (331). The processor (147) may perform the conversion into the second labeling data in the first target region (310) during scanning in one direction. That is, when the first non-target region (331) is scanned and then the first target region (310) that is in contact with the first non-target region (331) is scanned, the conversion into the second labeling data may be performed sequentially along one direction starting from the first labeling data located in a first column of the first target region (310). The conversion into the second labeling data may be sequentially performed along one direction from the first column to a last column of the first target region (310).

Meanwhile, as illustrated in FIG. 13, an entire region of a plurality of first labeling data having a matrix form may be positioned, along one direction, in an order of a first non-target region (331), a first target region (310), a second non-target region (332), a second target region (320), and a third non-target region (333). That is, two target regions (310, 320) may be positioned in the entire region of the plurality of first labeling data having a matrix form, and a second non-target region (332) may be positioned between the first target region (310) and the second target region (320).

In this case, during scanning in one direction, conversion into the second labeling data may be skipped for each of the first non-target region (331), the second non-target region (332), and the third non-target region (333), and the conversion into the second labeling data may be performed only for each of the first target region (310) and the second target region (320).

For example, when scanning in a left-to-right direction, the conversion into the second labeling data for the first non-target region (331) is skipped, and when the first non-target region (331) and the first target region (310) are scanned, the first labeling data may be sequentially converted into the second labeling data from a first column to a last column of the first target region (310).

When the conversion into the second labeling data for the first target region (310) is completed, scanning may be again performed in a rightward direction, and when the second non-target region (332) is scanned, the conversion into the second labeling data for the second non-target region (332) may be skipped.

Thereafter, when scanning is continued and the second target region (320) that is in contact with the second non-target region (332) is scanned, the first labeling data may be sequentially converted into the second labeling data from a first column to a last column of the second target region (320). When the conversion into the second labeling data for the second target region (320) is completed, scanning may be again performed in the rightward direction, and when the third non-target region (333) is scanned, the conversion into the second labeling data for the third non-target region (333) may be skipped. With such a scanning scheme, when the target regions (310, 320) are scanned in a left-to-right direction in an entire region of a plurality of first labeling data having a matrix form, the conversion into the second labeling data may be performed for the corresponding target regions (310, 320). When the non-target regions (331, 332, 333) are scanned in the left-to-right direction in the entire region of the plurality of first labeling data having a matrix form, the conversion into the second labeling data for the corresponding non-target regions (331, 332, 333) may be skipped.

According to the embodiment, since the first labeling data are converted into the second labeling data only for target regions (310, 320), and conversion of the first labeling data into the second labeling data is skipped for non-target regions (331, 332, 333), noise introduced from the non-target regions (331, 332, 333) is not included in the second labeling data converted in the target regions (310, 320). That is, in the conversion into the second labeling data, since the non-target regions (331, 332, 333) and the target regions (310, 320) operate independently of each other, noise introduced from the non-target regions (331, 332, 333) is not reflected in the second labeling data converted in the target regions (310, 320).

FIG. 14 is another exemplary diagram for explaining the conversion into the second labeling data according to the embodiment.

As illustrated in FIGS. 6 and 14, when a second non-target region (332) is positioned between a first target region (310) and a second target region (320), the processor (147) may sequentially perform conversion into the second labeling data along a first direction ((-)X-axis direction) starting from the first labeling data of the first target region (310) that is in contact with the second non-target region (332), and may sequentially perform the conversion into the second labeling data along a second direction ((+)X-axis direction) starting from the first labeling data of the second target region (320) that is in contact with the second non-target region (332).

That is, when the second non-target region (332) is positioned between the first target region (310) and the second target region (320), the first labeling data in the first target region (310) may be converted into the second labeling data in a direction from the second non-target region (332) toward the first target region (310), that is, along the (-)X-axis direction, and the first labeling data in the second target region (320) may be converted into the second labeling data in a direction from the second non-target region (332) toward the second target region (320), that is, along the (+)X-axis direction. In this case, the conversion into the second labeling data for the first target region (310) and the conversion into the second labeling data for the second target region (320) may be simultaneously performed, but are not limited thereto.

According to the embodiment, since the conversion into the second labeling data is simultaneously performed for the first target region (310) and the second target region (320) adjacent to the second non-target region (332) with reference to the second non-target region (332), a data processing speed can be further reduced.

Meanwhile, according to the embodiment described above, the conversion into the second labeling data may be performed only for the target regions (310, 320) determined based on the second threshold value. Although the second threshold value is set in consideration of noise, when the conversion into the second labeling data is performed only for the target regions (310, 320) determined based on the second threshold value, there is room for further improvement of sensing performance.

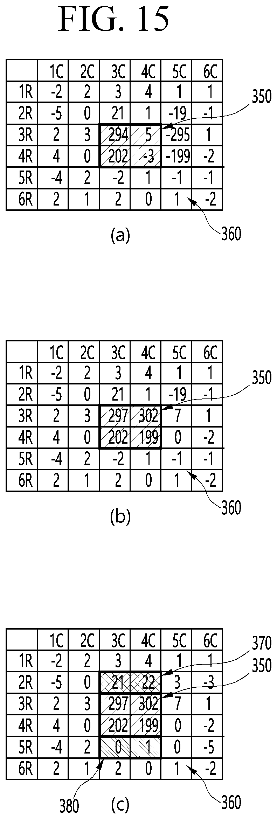

Hereinafter, with reference to FIG. 15, a method capable of further improving sensing performance will be described.

FIG. 15 illustrates conversion of a plurality of first labeling data into a plurality of second labeling data in a comparative example and the embodiment.

As illustrated in (a) of FIG. 15, a plurality of first labeling data having a matrix form composed of six rows and six columns may be provided as raw data.

By the method of obtaining target regions and non-target regions according to the embodiment (see S220 of FIG. 7, and FIGS. 11 and 12), target regions (350) and non-target regions (360) may be obtained from an entire region of the plurality of first labeling data having a matrix form. The target regions (350) and the non-target regions (360) may be obtained based on the second threshold value.

As illustrated in (b) of FIG. 15, the first labeling data included in the target region (350) may be converted into the second labeling data. Accordingly, the first labeling data included in the target region (350), that is, 294, 5, 202, and -3, may be converted into the second labeling data, that is, 297, 302, 202, and 199, respectively.

Meanwhile, the number of the first labeling data included in the target region (350) may vary depending on the magnitude of the second threshold value. When the second threshold value is set to be large, the number of the first labeling data included in the target region (350) can be reduced. In this case, among the non-target region (360), an adjacent region adjacent to the target region (350) may comprise meaningful first labeling data for detecting a touch or proximity by an object, although the data are not included in the target region (350). Such first labeling data may be included in the target region (350) and converted into the second labeling data, thereby improving sensing performance, that is, accuracy, precision, and linearity.

That is, as illustrated in (c) of FIG. 15, the processor (147) may convert, into the second labeling data, the first labeling data included in at least one or more adjacent regions (370, 380) adjacent to the target region (350) among the non-target region (360). The processor (147) may determine the at least one or more adjacent regions (370, 380) as additional target regions, and may convert, into the second labeling data, the first labeling data comprised not only in the target region (350) but also in each of the determined additional target regions. The target region (350) may be referred to as a first target region, and the additional target regions may be referred to as second target regions. The target region (350) may be referred to as the first target region, a first adjacent region (370) adjacent to an upper side of the target region may be referred to as a second target region, and a second adjacent region (380) adjacent to a lower side of the target region may be referred to as a third target region.

For example, in (b) of FIG. 15, the first labeling data having a value of 21 and the first labeling data having a value of 1, which are adjacent to an upper side of the target region (350), may be meaningful for detecting a touch or proximity by an object. Nevertheless, since the first labeling data having a value of 21 and the first labeling data having a value of 1 are not included in the target region (350), the respective first labeling data were not converted into the second labeling data. Accordingly, sensing performance could not be further improved.

However, as illustrated in (c) of FIG. 15, the first labeling data having a value of 21 and the first labeling data having a value of 1, which are included in the first adjacent region (370) adjacent to an upper side of the target region (350), may be converted into the second labeling data having a value of 21 and the second labeling data having a value of 22, respectively. Accordingly, based on the second labeling data converted for each of the target region (350) and the first adjacent region (370), a position, coordinates, etc. of a touch or proximity by an object may be detected, thereby further improving sensing performance.

Meanwhile, the first labeling data included in the second adjacent region (380) adjacent to a lower side of the target region (350) may also be converted into the second labeling data and used for detecting a position, coordinates, etc. of a touch or proximity by an object, thereby further improving sensing performance.

Meanwhile, Table 1 below shows data processing times according to comparative examples and the embodiment.

**Table 1**

| | Number of simultaneous touches | comparative example 1 | comparative example 2 | embodiment |
|---|---|---|---|---|
| Scheme | | Local D2S conversion | Full D2S conversion | |
| data processing time [ms] | None | 2.00 | 2.84 | 0.88 |
| | 1PT | 2.00 | 2.84 | 1.28 |

As represented in Table 1, it may be seen that, in both cases of no touch (none) and one-time touch (1PT), the data processing time in the embodiment is shorter than those in a comparative example 1 and a comparative example 2.
The above detailed description should not be construed as being restrictive in all respects and should be considered as illustrative. The scope of the embodiments should be determined by reasonable interpretation of the appended claims, and all changes within the equivalent scope of the embodiments are included in the scope of the embodiments.

## Claims

1. A sensing driving device, comprising:
a sensing circuit configured to obtain a plurality of sensing signals for an object from a plurality of sensing cells arranged on a panel;
a memory configured to store a data conversion algorithm; and
a processor configured to execute the data conversion algorithm,
wherein the processor is configured to:
label the obtained plurality of sensing signals based on a first threshold value to obtain a plurality of first labeling data;
obtain a target region and a non-target region based on the plurality of first labeling data; and
convert the first labeling data included in the target region into a second labeling data, and
wherein the target region is a touch region or a proximity region.

2. The sensing driving device of claim 1, wherein the processor is configured to:
obtain the first labeling data having the maximum values in each of a row direction and a column direction based on the plurality of first labeling data; and
obtain the target region and the non-target region based on the first labeling data having the maximum values using a second threshold value.

3. The sensing driving device of claim 2, wherein the processor is configured to:
obtain a first candidate target region based on the first labeling data having the maximum values obtained in the row direction;
obtain a second candidate target region based on the first labeling data having the maximum values obtained in the column direction; and
determine the target region based on the first candidate target region and the second candidate target region.

4. The sensing driving device of claim 1, wherein the processor is configured to sequentially perform conversion into the second labeling data along one direction starting from the first labeling data of a first target region that is in contact with the non-target region.

5. The sensing driving device of claim 1, wherein, when the non-target region is positioned between a first target region and a second target region, the processor is configured to:
sequentially perform conversion into the second labeling data along a first direction starting from the first labeling data of the first target region that is in contact with the non-target region; and
sequentially perform the conversion into the second labeling data along a second direction starting from the first labeling data of the second target region that is in contact with the non-target region.

6. The sensing driving device of claim 1, wherein the processor is configured to convert, into the second labeling data, the first labeling data included in at least one or more adjacent regions adjacent to the target region among the non-target region.

7. A sensing driving method, comprising:
labeling a plurality of sensing signals for an object based on a first threshold value to obtain a plurality of first labeling data;
obtaining a target region and a non-target region based on the plurality of first labeling data; and
converting a first labeling data included in the target region into a second labeling data,
wherein the plurality of sensing signals are obtained from a plurality of sensing cells arranged on a panel, and
wherein the target region is a touch region or a proximity region.

8. The sensing driving method of claim 7, wherein the obtaining of the target region and the non-target region comprises:
obtaining the first labeling data having the maximum values in each of a row direction and a column direction based on the plurality of first labeling data; and
obtaining the target region and the non-target region based on the first labeling data having the maximum values using a second threshold value.

9. The sensing driving method of claim 8, wherein the obtaining of the target region and the non-target region comprises:
obtaining a first candidate target region based on the first labeling data having the maximum values obtained in the row direction;
obtaining a second candidate target region based on the first labeling data having the maximum values obtained in the column direction; and
determining the target region based on the first candidate target region and the second candidate target region.

10. The sensing driving method of claim 7, further comprising converting, into the second labeling data, the first labeling data included in at least one or more adjacent regions adjacent to the target region.
